Europäisches Patentamt

European Patent Office

Office européen des brevets

(11) Publication number: **0 193 224**
**B1**

# (12) EUROPEAN PATENT SPECIFICATION

(45) Date of publication of patent specification: **23.01.91**

(51) Int. Cl.⁵: **G 02 B 6/28**

(21) Application number: **86200171.6**

(22) Date of filing: **09.11.82**

(60) Publication number of the earlier application in accordance with Art. 76 EPC: **0 081 296**

(54) **Manufacture of fiber optic couplers.**

(30) Priority: **19.11.81 US 323038**

(43) Date of publication of application:
**03.09.86 Bulletin 86/36**

(45) Publication of the grant of the patent:
**23.01.91 Bulletin 91/04**

(84) Designated Contracting States:
**AT BE CH DE FR GB IT LI LU NL SE**

(56) References cited:
**DE-A-2 345 273**
**DE-A-2 516 975**
**DE-A-2 922 938**
**DE-A-2 930 454**

(73) Proprietor: **THE BOARD OF TRUSTEES OF THE LELAND STANFORD JUNIOR UNIVERSITY**
**Encina 105 Stanford University**
**Stanford California 94305 (US)**

(72) Inventor: **Newton, Steven A.**
**160 Hedge Road**
**Menlo Park California 94305 (US)**
Inventor: **Bowers, John E.**
**1183 Solana Drive**
**Mountain View California 94040 (US)**

(74) Representative: **Rushton, Ronald et al**
**SOMMERVILLE & RUSHTON 11 Holywell Hill**
**St. Albans Hertfordshire AL1 1EZ (GB)**

Courier Press, Leamington Spa, England.

## Description

This invention is concerned with the manufacture of fiber optic couplers. More particularly, the invention is concerned with a method of simultaneously fabricating a plurality of couplers.

Fiber optic couplers are well known and are disclosed, for example, in European Patent Application No. 82304705.5, Publication No. 0074789. That reference discloses fiber optic directional couplers which transfer optical power between two fibers or strands of fiber optic material. The coupler comprises a pair of bases or blocks having respective arcuate grooves for mounting respective strands of fiber optic material. Material is removed simultaneously from the blocks and the strands until a desired amount of cladding of the fiber optic strand has been removed. The strands are then positioned with the cut-away portions of the fibers in facing relationship.

The coupler has four ports, i.e. the ends of the two fibers, so that at least some of the light input into one end of one fiber is coupled to the other fiber to exit through the other end of the other fiber. As is described in that reference, to ensure proper evanescent field coupling, the amount of material removed from the fibers must be carefully controlled so that the spacing between the core portions of the strands is within a predetermined critical zone. This causes each strand to receive a significant portion of the evanescent field energy from the other strand and coupling is achieved without significant energy loss. That reference also discloses a method for manufacturing a coupler in which material is removed from the cladding of a fiber optic strand over an area of the cladding to a predetermined distance from the core of the strand. The strand is input with light and the area where cladding is removed is coated with a substance whose index of refraction approximates that of the core. A determination is then made of the portion of propagated light which escapes from the coated area and the cladding is removed until that portion of escaping light has reached a predetermined value.

The manufacture of fiber optic couplers is relatively complicated and there is therefore a need for an improved process of manufacture which allows the mass production of optical coupling devices.

In German patent application DE—A—2 930 454, there is disclosed a method for manufacturing optical couplers. In particular, multiple segments of optical fibers are mounted in V-shaped grooves in blocks forming a first and a second base. The fibers are then ground to produce optical taps, and juxtaposed to the first and second bases. The bases can be split to provide a plurality of optical taps. One problem encountered in the manufacturing of such optical couplers resides in the exact positioning of the first and second bases. Separators are provided in the device described in the German reference to ensure that the blocks are positioned within the predetermined distance required to achieve optical coupling. However, the transversal and longitudinal offsets of the two blocks must be minimized in order to achieve optimum coupling.

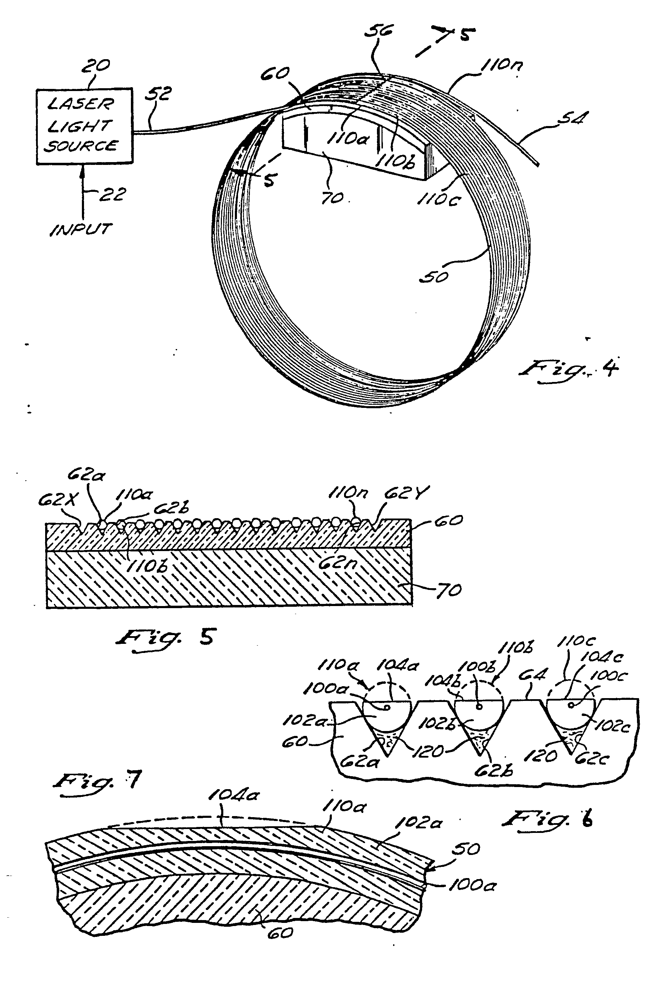

As described in "Applied Optics", Vol. 20, No. 18, page 312 (Figure 5), it is also known to use etched silicon plates on silica slabs to manufacture a block of multiple couplers, the block being subsequently cut up to provide a plurality of individual couplers. This reference, however, does not address the problems regarding the exact positioning of the fibers on the blocks. The object of the present invention is therefore to achieve a precise positioning of the two blocks of the coupler with respect to each other.

According to the present invention as claimed in Claim 1, there is provided a method of manufacturing fiber optic couplers, which comprises mounting multiple first segments of optical fiber, having an inner core and an outer cladding, into multiple parallel grooves on a first base, simultaneously removing a portion of cladding from a portion of each of the first segments to a predetermined distance above the cores of the fiber in the first segments to produce an optical tap in each of the first segments, mounting multiple second segments of optical fiber having an inner core and an outer cladding into multiple parallel grooves on a second base, simultaneously removing a portion of cladding from a position of each of the second segments to a predetermined distance above the cores of the fiber in the second segment to produce an optical tape in each of the second segments, juxtaposing plural ones of the optical taps with plural others of the optical taps, thereby creating a multiplicity of optical couplers, aligning the plural ones of the optical taps with the plural others of the optical taps by alignment means disposed in two of the grooves in each of the first and second bases, and splitting said bases to separate a plurality of the optical taps.

Preferably, the grooves in the upper surface of the first and second bases have a generally V-shaped cross-section. Preferably, the upper surfaces of the bases are formed of silicon and the grooves are formed by etching the silicon. The grooves are preferably formed wider and deeper near the sides of the bases than in the center of the bases.

According to a second aspect of the present invention as claimed in Claim 5, there is disclosed a method of manufacturing fiber optic couplers by juxtaposing optical taps comprising mounting multiple first and second segments of optical fiber having an inner core and an outer cladding into multiple parallel grooves on first and second bases, simultaneously removing a portion of cladding from a portion of each of the first segments to a predetermined distance above the cores of the fiber in the first segments to produce an optical tap in each of the first segments and simultaneously removing a portion of cladding from a portion of each of the second segments to a predetermined distance above the cores of the fiber in the second segments to produce an optical tap in each of the second segments, aligning each of the portions of the first segments with each of the portions of the second segments by alignment means disposed in two of the grooves in each of the first and second bases, and splitting the bases to separate a plurality of the optical taps, whereby the separated optical taps form respective fiber optic couplers.

The couplers in this invention may be formed by utilizing a large number of revolutions of single mode optical fiber around a base with a portion of each revolution glued into the next of a number of parallel v-grooves in a plate of chip on the surface of the base. A portion of the cladding on each revolution of the optical fiber mounted on the plate or chip is removed along a lateral line normal to the revolutions of fiber in the v-grooves, thereby simultaneously creating a tap in each revolution where the line crosses that revolution.

The optical fibers are preferably mounted so that the distances between successive revolutions of the fibers at the point where they are to be tapped is identical. In addition, the level at which the fibers are mounted at the location where they are to be tapped coincides with the lateral line normal to the v-grooves, since in the tapping process a portion of the cladding is removed by lapping the surface of the fibers. Since the lapping operation simultaneously removes a portion of the cladding on each revolution of the fibers wound around the core, the fibers are mounted at the same level so that an identical amount of cladding is removed from each revolution of the fibers, thusly creating a number of identical taps.

In order to perform the lapping operation on the portions of each revolution of fiber which are to have some of the cladding removed, that portion of the fiber should be fixedly mounted. The preferred way to do this is by utilizing silicon chips having grooves etched into them. Since it is possible to etch the silicon chips by using photolithographic methods and to obtain a high degree of accuracy in the etching operation, such a method is the preferred embodiment. The use of grooves etched into a silicon chip to orient the revolutions of optical fiber is also useful in that it allows for highly accurate placement of either the photosensitive elements or the optical fiber coupler leads in a way ensuring they are correctly oriented in order to ensure proper operation of the taps.

The present invention has an advantage that it is possible to obtain a very large number of taps, i.e., hundreds or thousands of taps, from a single relatively compact device, and at a relatively modest cost of construction. Since all of the taps are formed in a single operation, a large number of taps having uniform characteristics may be simultaneously manufactured, a requirement for accurate operation of the device.

Also, since evanescent field coupling is utilized (as opposed to lapping into the core of the fiber), the present invention provides a more efficient, stable, and controllable tapping of the optical fiber.

These and other advantages of the present invention are best understood through reference to the drawings, in which:

Figure 1 is a perspective view of a portion of the grooved chip used to properly align the optical fiber windings;

Figure 2 is a perspective view illustrating the photolithographic technique utilized to achieve precise alignment of the v-grooves;

Figure 3 is a perspective view of a portion of the silicon wafer already to be etched;

Figure 4 shows the windings of fiber around a base in the preferred embodiment of the present invention;

Figure 5 is a cross-sectional view of the device shown in Figure 4, showing the windings of optical fiber aligned in the v-grooves;

Figure 6 is an enlarged view of a portion of Figure 5 showing the optical fibers mounted in the v-grooves and lapped;

Figure 7 is a cross-sectional view of the first winding of optical fiber mounted in the v-grooves illustrating how the fiber is lapped;

Figure 8 is a perspective view of a mask used in the photolithographic process for an alternative embodiment;

Figure 9 is a top view of a v-groove in a wafer manufactured using the mask shown in Figure 8;

Figure 9A is a cross-sectional view of the v-groove shown in Figure 9;

Figure 10 is a cross-sectional view of the apparatus illustrating the technique used for alignment;

Figure 11 illustrates the simultaneous manufacture of multiple couplers.

In the present invention, as illustrated in Figure 4, in order to form one half of a coupler assembly a single segment of optical fiber 50 is used, beginning at the input end 52, which is supplied with a light input signal from a laser light source 20, and ending at an output end 54. The optical fiber 50 is wound around a chip 60 with V-grooves to receive the optical fiber 50. The optical fiber 50 is wound around the chip 60 n times, with the portion of the fiber on the chip at the first winding being 110a, the portion of the fiber 50 mounted on the chip in the second winding being 110b, and so on. At the lateral line 56 normal to the fiber segment axes, taps are constructed so that each revolution of the optical fiber 50 is tapped at the lateral line 56. Before a description of the construction of the taps on the optical fiber 50, it is necessary to describe the construction of the chip 60 and the manner by which the optical fiber 50 is laid in the v-grooves in the chip 60.

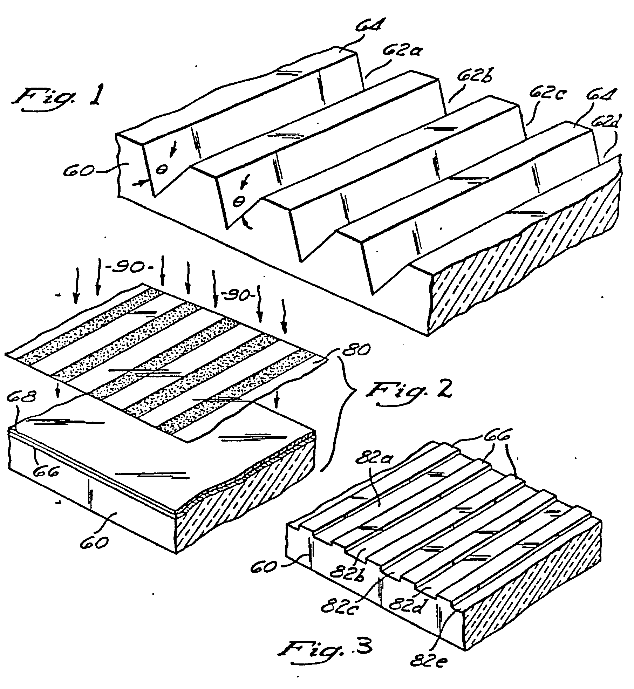

In Figure 1, a portion of the chip 60 with the completed v-grooves is shown. It is desirable that each of these v-grooves be identical in width and depth, since the fibers are to be coplanar because the taps in the fibers in these v-grooves will be constructed simultaneously. If the v-grooves are identical, the taps on the fibers will have uniform characteristics.

Because of this need for great precision in the construction of the v-grooves, the preferred material for the chip 60 is silicon, which can be etched by photolithographic techniques, rather than some other material in which grooves are machined. The type of silicon used is commercially available 100 oriented silicon, because when the surface of this type of silicon is subjected to an etching solution, the surface is dissolved at an angle theta, as shown in Figure 1. For 100 oriented silicon the angle theta is 54.74 degrees.

Therefore, in order to make the v-grooves shown in Figure 1 in the silicon chip 60, the following photolithographic method may be used. The chip is first heated so that a very thin oxide layer 66 will cover the chip 60, as shown in Figure 2. The chip is then coated with a photosensitive coating 68 known as photoresist. A mask 80 is then placed over the chip, and the top of the chip is exposed to ultraviolet light 90. For the mask 80 shown in Figure 2, positive-acting photoresist is used, so the portions of the photoresist 68 under the opaque sections of the mask 80 will be left to perform the masking function.

The next step is to etch away the photoresist 68 and oxide layer 66 which were under the non-opaque portions of the mask by using a buffered hydrochloric acid solution. The remaining photoresist is then stripped by use of a special solvent, and the chip 60 will appear as it does in Figure 3, covered by a mask of the oxide layer 66. The silicon wafer is then placed into an anisotropic etching solution, commonly potassium hydroxide solution. The portions of the chip not covered by the oxide layer 66 will then be dissolved by the etching solution at an angle of 54.74 degrees from the surface 64 of the chip 60. The etch will develop as a flat-bottom groove until the two angled planes intersect and a true v-groove is formed, as shown in Figure 1. This photolithographic technique is well-known in the art, and has been used extensively in the manufacture of semiconductors.

The size of the groove to be etched in the silicon chip 60 of course depends on the optical fiber being used. There are two widely used types of single mode optical fiber, one manufactured by ITT which has a diameter of about 80 microns (400 microns including the plastic jacket), and a second brand of fiber manufactured by Corning which is 125 microns in diameter (135 microns with the lacquer jacket). Which of these or other fibers is used depends on the wavelength of the light to be used; if visible light is to be used, the ITT fiber is acceptable since it is single mode at visible light wavelengths (longer than green); and if infrared light is to be used, the Corning fiber is acceptable since it is single mode at infrared wavelengths.

Referring now to Figure 4, in order to construct an optical tap, it is desirable to have the optical fiber surface to be tapped mounted in a curved configuration so that a flat portion of the optical fiber 50 may be lapped to provide a tap of the light traveling within the fiber 50. Therefore, the silicon chip 60 is mounted on a block of quartz 70 which has a curved upper surface. It has been found that a silicon chip of standard thickness (0.25 millimeter) and about three-centimeter length can be bent without breaking around a twelve-inch radius. An adhesive substance such as wax is used to hold the silicon chip 60 on the quartz block 70 in the curved configuration shown in Figure 4. The optical fiber 50 may now be mounted on silicon chip 60.

Before the optical fiber 50 can be mounted in the v-grooves in the silicon chip 60, the portions of the optical fiber 50 which are to be mounted in the v-grooves preferably have the protective jacket removed. The ITT fiber has a plastic jacket which may be removed by dipping it in sulfuric acid. The resiliency of the plastic jacket prevents precision in the lapping operation, so it should be removed. The Corning fiber has a lacquer jacket which may be removed by dipping it in acetone. Since the lacquer jacket is more solid than the plastic jacket, its removal is preferential rather than mandatory.

The installation of the fiber 50 in the v-grooves of the silicon chip 60 is best shown in Figures 5 and 6. A portion of the optical fiber 50 near the input end 52 of the fiber 50 is mounted in the second v-groove 62a of the silicon chip 60. It should be noted that there is a first v-groove 62x, as shown in Figure 5, which is not used to receive the optical fiber 50, but rather for alignment purposes. The portion of the optical fiber 50 which is to be placed in the v-groove 62a is numbered 110a, and before it is mounted in the v-groove 62a, an adhesive substance 120 is placed in the bottom of the v-groove 62a. Therefore, when the portion 110a of the optical fiber 50 is placed in the v-groove 62a and the optical fiber 50 bottoms out against the sides of the v-groove 62a, it will be permanently retained there by the adhesive 120.

Following the placement of portion 110a of the optical fiber 50 in the first v-groove 62a, a length L of the optical fiber is left between the center of the portion 110a and the center of the second portion 110b of the optical fiber 50, which is to be mounted in the second v-groove 62b (Figure 4). Therefore it can be seen that the optical fiber 50 is wound around the silicon chip 60 so that upon each successive revolution it is fitted into the next succeeding v-groove, and secured by the adhesive 120, as shown in Figure 4. When the last portion 110 of the optical fiber 50 has been fitted into the last v-groove 62n of the silicon chip 60, the optical fiber 50 terminates at end 54, as shown in Figure 4.

The next step is to lap the upper surface of the portions 110 of the optical fiber 50 at the lateral line 56, the portions 110 of the optical fiber 50 being mounted inm the silicon chip 60. This lapping operation will remove a portion of the cladding 102, as best shown in Figure 6. It is important to note that not all of the cladding material 102 around the core 100 of the optical fiber 50 is to be removed. The distance between the core 100 and the lapped surface 104 of the fiber 50 depends on the amount of light which is to be removed from the fiber at each tap. When small amounts of light are being extracted, the closer the lapped surface 104 is to the core 100 of the fiber 50, the more light is extracted from the fiber 50 at that tap. For example, between approximately five and ten microns of cladding will be left between the lapped surface 104 and the core 100 of the fiber 50. A longitudinal cross sectional view of the lapped optical fiber is shown in Figure 7.

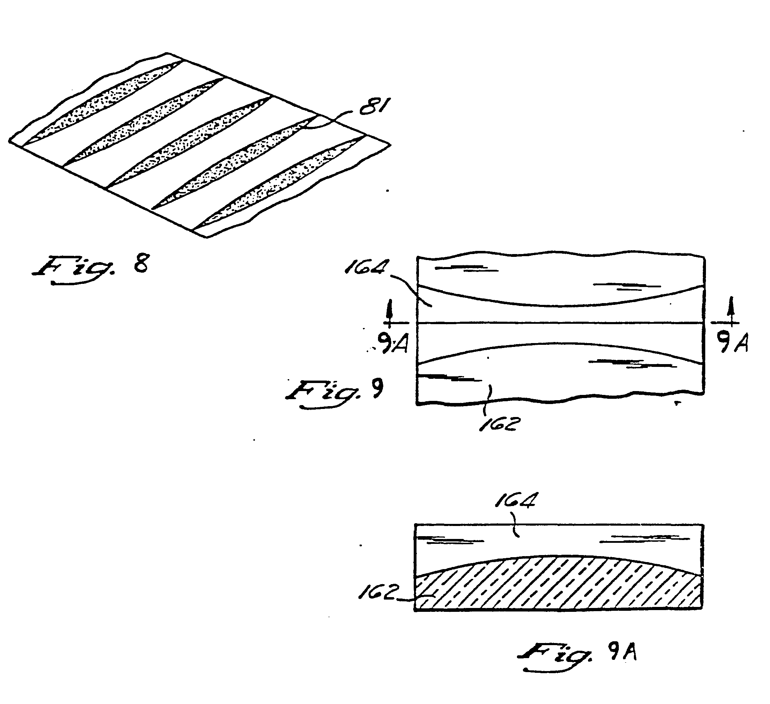

In an alternative method for manufacturing the tap, instead of using a quartz block 70 with a curved surface, the silicon chip may have curved v-grooves cut into it, as shown in Figures 9 and 9A. In order to have such curved v-grooves, a mask 81 such as that shown in Figure 8 is used. Because the silicon chip will be etched at a 54.74 degree angle from the surface of the chip, a wider v-groove will then be cut at the edges of the chips tapering to the normal width in the center of the chip 162, and since the depth of the v-groove is proportionate to the width of the v-groove, it will be deeper at the ends than it will be in the center, thus resulting in the curved v-groove 164 shown in Figure 9 and 9A.

While this technique somewhat simplifies the construction of the curved v-grooves necessary for the optical taps, it does have several problems. First, the photolithographic technique utilizes very small steps rather than a uniform curve in the preparation of the mask 81. This limitation is caused by the fact that the mask 81 is prepared in digital steps instead of in an analog curve. Therefore, the resulting v-groove will also contain these very small steps, and this leads to the possibility of microbending losses when the optical fiber 50 is installed into the v-grooves. Another problem is that the silicon wafer used is fairly thin, and if the v-grooves have too much depth, they could substantially weaken the strength of the silicon wafer. Thicker silicon chips are generally not of the uniform thickness required for the precise mounting of the fiber 50. Finally, since the deeper portions of the v-grooves at the edge of the silicon chip 50 are formed by making the v-grooves wider at the edges, the minimum distance between v-grooves must necessarily be greater for this embodiment, thus making the device larger. Because of these problems, the first technique describe above is preferred over the curved v-groove technique.

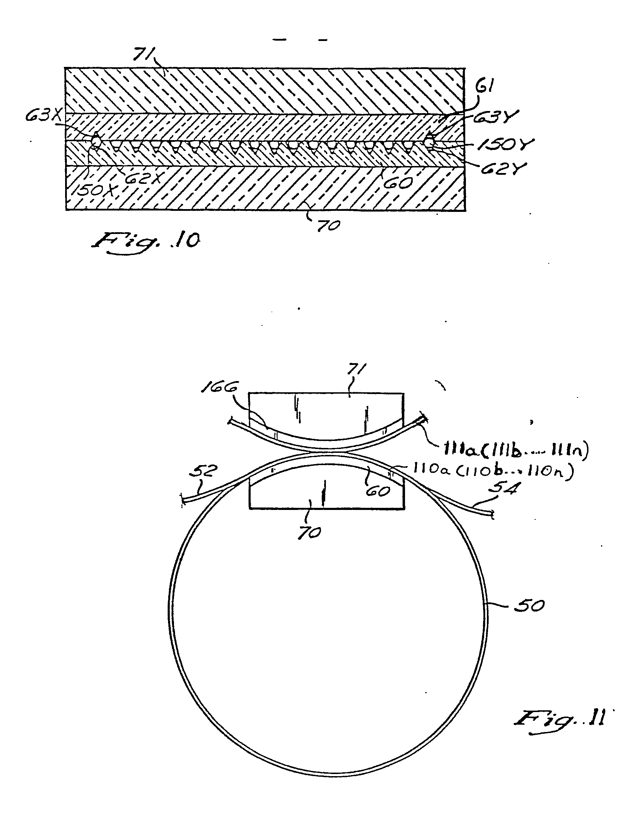

Figure 10 shows how the two additional v-grooves 62x and 62y in the silicon chip 60, and two v-grooves 63x and 63y in a second silicon chip 61 can be used for correctly mounting the two chips together. Two pins 150x and 150y fit in the corresponding pairs of v-grooves 62x and 63x, 62y and 63y, respectively, to ensure proper alignment. If desired, the second silicon chip 61 may be also be mounted on a quartz block 71. The v-grooves in the second chip 61 are not shown.

In order to form the other half of the coupler assembly the invention also involves taking a number of segments 111a, 111b, 111c, . . . 111n of an optical fiber 111 shown in Figure 11 and mounting them in v-grooves in a second silicon chip 166 which is identical to the chip 60 and which is mounted on quartz block 71, and then lapping the surfaces of the optical fiber 111 as described above for the optical fibers 110. The two silicon chips 60 and 166 are then placed in proximity, alignment being aided by the pins 150x and 150y shown in Figure 10, and optical couplers are formed.

Thus, by using the v-grooves — silicon chip technology, a large number of optical couplers may be simultaneously fabricated. These couplers could then be split into individual couplers, each with four ports as in the above-referenced case, and sold individually.

Probably the most notable advantage of this invention is that a relatively large number of identical optical taps may be quickly, conveniently, and inexpensively constructed in a single compact unit.

Thus, the v-groove — silicon chip technology discloses allows identical coupling devices to be manufactured in large quantities for commercial sale.

## Claims

1. A method of manufacturing fiber optic couplers, comprising:

mounting multiple first segments (110) of optical fiber (50) having an inner core (100) and an outer cladding (102) into multiple parallel grooves (62) on a first base (60, 70);

simultaneously removing a portion of cladding (102) from a portion of each of said first segments (110) to a predetermined distance above the cores (100) of said fiber in said first segments to produce an optical tap (104) in each of said first segments;

mounting multiple second segments (111) of optical fiber (50) having an inner core (100) and and an outer cladding (102) into multiple parallel grooves on a second base (166, 71);

simultaneously removing a portion of cladding from a portion of each of said second segments (111) to a predetermined distance above the cores (100) of said fiber (50) in said second segments (111) to produce an optical tap in each of said second segments;

juxtaposing plural ones of the optical taps in said first segments with plural others of the optical taps in said second segments, thereby creating a multiplicity of optical couplers;

aligning said plural ones of the optical taps with said plural others of the optical taps by alignment means disposed in two of said grooves in each of said first and second bases; and

splitting said bases to separate a plurality of the optical taps.

2. A method as claimed in Claim 1, further characterized by: forming said grooves in the upper surface of said first and second bases, said grooves having a generally V-shaped cross-section.

3. A method as claimed in Claim 2, characterized in that said upper surfaces are formed of silicon and said grooves are formed by etching said silicon.

4. A method as claimed in Claim 2 or 3, characterized by forming said grooves wider and deeper near the sides of said bases than in the center of said bases.

5. A method of manufacturing fiber optic couplers by juxtaposing optical taps and comprising:

mounting multiple first and second segments (110, 111) of optical fiber (50) having an inner core (100) and an outer cladding (102) into multiple parallel grooves (62) on a first and second base (60, 70; 66, 71);

simultaneously removing a portion of cladding from a portion of each of said first segments (110) to a predetermined distance above the cores (100) of said fiber in said first segments to produce an optical tap (104) in each of said first segments and simultaneously removing a portion of cladding from a portion of each of said second segments (111) to a predetermined distance above the cores (100) of said fiber (50) in said second segments (111) to produce an optical tap in each of said second segments;

aligning each of said portions of said segments (110) with each of said portions of said second segments (111) by alignment means disposed in two of said grooves in each of said first and second bases (60, 70; 66, 71); and

splitting said bases to separate a plurality of the optical taps, whereby the separated optical taps form respective fiber optic couplers.

**Patentansprüche**

1. Verfahren zur Herstellung von faseroptischen Kopplern, umfassend:

Montieren mehrfacher erster Segmente (110) einer optischen Faser (50) mit einem inneren Kern (100) und einer äußeren Umhüllung (102) in mehreren parallelen Nuten (62) auf einer ersten Basis (60, 70);

gleichzeitiges Entfernen eines Teils der Umhüllung (102) von einem Teil jedes der ersten Segmente (110) bis zu einem vorbestimmten Abstand über der Kernen (100) der Faser in den ersten Segmenten, um eine optische Anzapfung (104) in jedem der Segmente zu bilden;

Montieren mehrfacher zweiter Segmente (111) einer optischen Faser (50) mit einem inneren Kern (100) und einer äußeren Umhüllung (102) in mehrfachen parallelen Nuten auf einer zweiten Basis (166, 71);

gleichzeitiges Entfernen eines Teils der Umhüllung von einem Teil jedes der zweiten Segmente (111) bis auf einen vorbestimmten Abstand über der Kernen (100) der Faser (50) in den zweiten Segmenten (111), um eine optische Anzapfung in jedem der zweiten Segmente zu bilden;

Nebeneinanderanordnen mehrerer der optischen Anzapfungen in den ersten Segmenten mit mehreren anderen der optischen Anzapfungen in den zweiten Segmenten, wodurch eine Vielzahl von optischen Kopplern gebildet wird;

Ausrichten der mehreren optischen Anzapfungen mit den mehreren anderen der optischen Anzapfungen durch Ausrichteinrichtungen, die in zwei der Nuten in jeder der ersten und zweiten Basen angeordnet sind; und

Aufteilen der Basen zur Trennung einer Vielzahl der optischen Anzapfungen.

2. Verfahren nach Anspruch 1, ferner gekennzeichnet durch: Formen der Nuten in der oberen Oberfläche der ersten und zweiten Basen, wobei die Nuten einen im wesentlichen allgemeinen V-förmigen Querschnitt besitzen.

3. Verfahren nach Anspruch 2, dadurch gekennzeichnet, daß die oberen Oberflächen aus Silizium gebildet sind und daß die Nuten durch Ätzen des Siliziums geformt werden.

4. Verfahren nach Anspruch 2 oder 3, dadurch gekennzeichnet, daß die Nuten weiter und tiefer nahe der Seiten der Basen als in der Mitte der Basen geformt werden.

5. Verfahren zur Herstellung von faseroptischen Kopplern durch Nebeneinanderanordnen optischer Anzapfungen und umfassend:

Montieren mehrfacher erster und zweiter Segmente (110, 111) einer optischen Faser (50) mit einem inneren Kern (100) und einer äußeren Umhüllung (102) in mehrfachen parallelen Nuten (62) auf ersten und zweiten Basen (60, 70; 66, 71);

gleichzeitiges Entfernen eines Teils der Umhüllung von einem Teil jeder der ersten Segmente (110) bis auf einen vorbestimmten Abstand über der Kernen (100) der Faser in den ersten Segmenten, um eine optische Anzapfung (104) in jedem der ersten Segmente zu erzeugen und gleichzeitiges Entfernen eines Teils der Umhüllung von einem Teil jeder der zweiten Segmente (111) bis auf einen vorbestimmten Abstand über der Kernen (100) der Faser (50) in den zweiten Segmenten (111), um eine optische Anzapfung in jedem der zweiten Segmente zu erzeigen;

Ausrichten jedes der Teile der ersten Segmente (110) mit jedem der Teile der zweiten Segmente (111) durch Ausrichteinrichtungen, die in zwei der Nuten in jeder der ersten und zweiten Basen (60, 70; 66, 71) angeordnet sind; und

Aufteilen der Basen zur Trennung einer Vielzahl der optischen Anzapfungen, wodurch die getrennten optischen Anzapfungen jeweilige faseroptische Koppler bilden.

**Revendications**

1. Méthode de fabrication de coupleurs en fibre optique comprenant les étapes suivantes:

monter de multiples premiers segments (110) de fibre optique (50) ayant une âme interne (100) et un revêtement extérieur (102) dans de multiples sillons parallèles (62) sur une première base (60, 70);

enlever simultanément une partie du revêtement (102) d'une partie de chacun desdits premiers segments (110) à une distance prédéterminée au dessu des âmes (100) de ladite fibre dans lesdits premiers segments de façon à produire une dérivation optique (104) dans chacun desdits premiers segments;

monter de multiples second segments (111) de fibre optique (50) ayant une âme interne (100) et un revêtement externe (102) dans de multiples sillons parallèles sur une seconde base (166, 71);

enlever simultanément une partie du revêtement d'une partie de chacun desdits seconds segments (111) à une distance prédéterminée au dessus des âmes (100) de ladite fibre (50) dans lesdits seconds segments (111) de façon à produire une dérivation optique dans chacun desdits seconds segments;

juxtaposer une pluralité desdites dérivations optiqués dans lesdits premiers segments avec une pluralité desdites dérivations optiques dans lesdits second segments, créant ainsi une multiplicité de couplers optiques;

aligner ladite pluralité desdites dérivations optiques avec ladite pluralité desdites dérivations optiques à l'aide de moyens d'alignement disposés dans deux desdits sillons dans chacune desdites première et seconde bases; et

séparer lesdites bases de façon à séparer une pluralité de dérivations optiques.

2. Méthode selon la revendication 1, caractérisé en outre par l'étape: former lesdits sillons dans la surface supérieure desdites première et seconde bases, lesdits sillons ayant une section en forme de V de manière générale.

3. Méthode selon la revendication 2, caractérisée en outre en ce que lesdites surfaces supérieures sont constituées de silicium et que lesdits sillons sont formés par élimination par gravure dudit silicium.

4. Méthode selon la revendication 2 ou 3, caractérisée par l'étape de formation desdits sillons de manière à ce qu'ils soient plus larges et plus profonds près des côtes desdites bases qu'au centree desdites bases.

5. Méthode de fabrication de coupleurs en fibre optique par juxtaposition de dérivations optiques et comprenant les étapes suivantes:

monter de multiples premiers est seconds segments (110, 111) en fibre optique (50) ayant une âme interne (100) et un revêtement extérieur (102) dans de multiples sillons parallèles (62) sur une première et seconde bases (60, 70; 66, 71);

enlever simultanément une partie du revêtement d'une partie de chacun desdits premiers segments (110) à une distance prédéterminée au dessus des âmes (100) de ladite fibre dans lesdits premiers segments de façon à chacun desdits premiers segments et enlever simultanément une partie du revêtement d'une partie de chacun desdits seconds segments (11) à une distance prédéterminée au dessus des âmes (100) de ladite fibre (50) dans lesdits seconds segments (11) de façon à produire une dérivation optique dans chacun desdits seconds segments;

aligner chacune desdites parties desdits premiers segments (110) avec chacune desdites parties desdits seconds segments (111) à l'aide de moyens d'alignement disposés dans deux desdits sillons dans chacune desdites première et seconde bases (60, 70; 66, 71); et

séparer lesdites bases de façon à séparer une pluralité de dérivations optiques, ce qui résulte en ce que les dérivations optiques séparées forment des couplers en fibres optiques respectifs.

*Fig. 1*

20

LASER
LIGHT
SOURCE

52

22

INPUT

56

75

60

110n

54

110a

110b

5

70

110c

50

*Fig. 4*

62a

62X

110a

62b

110n 62Y

60

110b

62n

70

*Fig. 5*

110a 104a

100a

102a

60

62a

110b

100b

104b

120

62b

110c 104c

64 100c

102c

120 62c

*Fig. 7*

104a

110a

102a

50

100a

60

*Fig. 6*

*Fig. 8*

*164*

*9A*          *9A*

*Fig. 9*

*162*

*164*

*162*

*Fig. 9A*

Fig. 10

Fig. 11

4